(19) Europäisches Patentamt
European Patent Office
Office européen des brevets

(11) Veröffentlichungsnummer: **0 011 695**
**B1**

(12) # EUROPÄISCHE PATENTSCHRIFT

(45) Veröffentlichungstag der Patentschrift: **24.03.82**

(21) Anmeldenummer: **79103787.2**

(22) Anmeldetag: **28.06.78**

(51) Int. Cl.³: **C 07 C 69/753,** C 07 C 149/40, C 07 C 61/39, C 07 C 61/40, C 07 C 67/343, C 07 C 51/09, C 07 C 148/00, C 07 C 51/58 // A01N53/00

(54) **Substituierte Cyclopropancarbonsäuren und deren Derivate; Verfahren zu deren Herstellung und ihre Verwendung zur Herstellung von Insektiziden und Akariziden.**

(30) Priorität: **06.07.77 DE 2730515**

(43) Veröffentlichungstag der Anmeldung: **11.06.80 Patentblatt 80/12**

(45) Bekanntmachung des Hinweises auf die Patenterteilung: **24.03.82 Patentblatt 82/12**

(84) Benannte Vertragsstaaten: **BE CH DE FR GB NL SE**

(56) Entgegenhaltungen:
**DE-A-1 817 881**
**DE-A-2 449 643**
**DE-A-2 539 895**
**DE-A-2 706 184**
**DE-A-2 738 150**
**DE-A-2 848 495**
**EP-A-0 003 060**
**EP-A-0 004 022**

**CHEMICAL ABSTRACTS, Band 88, Nr. 11, 13. März 1978, Seite 464, Nr. 74106c Columbus, Ohio, U.S.A. & JP-A-77 116 440 (SAGAMI CHEMICAL RESEARCH CENTER) 29.9.1977** →

→ **TETRAHEDRON LETTERS, Nr. 48, 1976 Seiten 4359-4362 Oxford, G.B. K. KONDO et al.: „A Facile Synthetic Route to (±)-Chrysanthemate Analogues"**

(73) Patentinhaber: **BAYER AG, Zentralbereich Patente, Marken und Lizenzen, D-5090 Leverkusen 1, Bayerwerk (DE)**

(72) Erfinder: **Fuchs, Rainer, Dr., Roeberstrasse 8, D-5600 Wuppertal 1 (DE)**
Erfinder: **Hamann, Ingeborg, Dr., Belfortstrasse 9, D-5000 Köln 1 (DE)**
Erfinder: **Stendel, Wilhelm, Dr., In den Birken 55, D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



**EP 0 011 695 B1**

# Substituierte Cyclopropancarbonsäuren und deren Derivate, Verfahren zu ihrer Herstellung und ihre Verwendung zur Herstellung von Insektiziden und Akariziden

Die vorliegende Erfindung betrifft neue substituierte Cyclopropancarbonsäuren und ihre Derivate, Verfahren zu ihrer Herstellung und ihre Verwendung als Zwischenprodukte zur Herstellung von Insektiziden und Akariziden.

Aus „Tetrahedron Letters“, Nr. 48, 1976, S. 4359 ff., ist 2,2-Dimethyl-3-styrylcyclopropancarbonsäureethylester bekannt geworden. Es sind daraus jedoch keine 2-Halogenstyrylcyclopropancarbonsäuren bekannt. Aus DE-A Nr. 1817881 ist bekannt, dass 2,2-Dimethyl-3-(2′-methoxycarbonyl-1′-propenyl)cyclopropancarbonsäure hergestellt werden kann, indem man Carbonaldehyd mit 1-Methoxycarbonylethyl-0,0-dialkylphosphonat umsetzt. Es ist daraus jedoch nichts über die Herstellung von Styrylcyclopropancarbonsäuren bekannt.

Aus DE-A Nr. 2539895 sind Verfahren zur Herstellung von Permethrinsäureestern bekannt, jedoch keine Verfahren zur Herstellung von Styrylcyclopropancarbonsäureestern.

Aus DE-A Nr. 2449643 sind Ester der 2,2-Dimethyl-3-(2′-ethyl-3′-oxo-1′-butenyl)cyclopropancarbonsäure bekannt, jedoch keine Styrylcyclopropancarbonsäuren.

Es wurden die neuen substituierten Cyclopropancarbonsäuren und ihre Derivate der Formel:

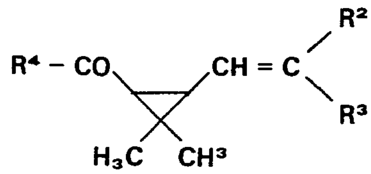

gefunden, in welcher:

$R^2$ für Halogen steht,

$R^3$ für Phenyl oder Phenylthio steht, wobei die Phenylringe gegebenenfalls ein- oder mehrfach, gleich oder verschieden durch Alkyl oder Halogen substituiert sein können,

$R^4$ für OH, Halogen oder $C_{1-4}$-Alkoxy, vorzugsweise Methoxy oder Ethoxy steht, wobei $R^4$ für den Fall, dass $R^3$ für Phenyl steht, für OH, Halogen oder Methoxy steht.

Sie eignen sich zur Herstellung der neuen substituierten Phenoxybenzyloxycarbonylderivate der Formel I:

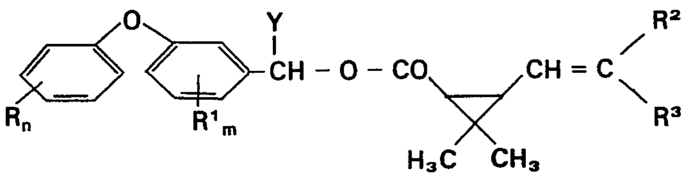

(I)

in welcher:

R und $R^1$ gleich oder verschieden sein können und für Wasserstoff oder Halogen stehen,

$R^2$ für Halogen steht,

$R^3$ für Phenyl oder Phenylthio steht, wobei die Phenylringe gegebenenfalls ein- oder mehrfach, gleich oder verschieden durch Alkyl oder Halogen substituiert sein können,

Y für Wasserstoff oder Nitril steht,

n für eine ganze Zahl von 1 bis 5 steht, und

m für eine ganze Zahl von 1 bis 4 steht.

Die neuen Verbindungen zeichnen sich durch starke insektizide und akarizide Eigenschaften aus.

Die allgemeine Formel (I) schliesst dabei die verschiedenen möglichen Stereoisomeren, die optischen Isomeren und Mischungen dieser Komponenten ein.

Weiterhin wurde gefunden, dass die substituierten Phenoxybenzyloxycarbonylderivate (I) erhalten werden, wenn man

a) Phenoxybenzylalkohole der Formel II:

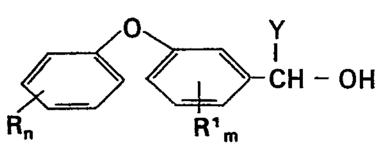

(II)

in welcher:

R, $R^1$, Y, n und m die oben angegebene Bedeutung haben,

mit substituierten Styrylcyclopropancarbonsäurederivaten der Formel III:

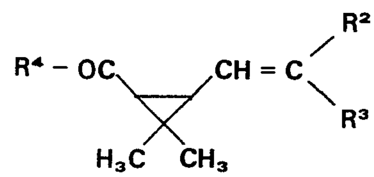

(III)

in welcher:

$R^2$ und $R^3$ die oben angegebene Bedeutung haben, und

$R^4$ für Hal oder $C_{1-4}$-Alkoxy, vorzugsweise Methoxy oder Ethoxy steht,

Hal für Halogen, vorzugsweise Chlor, steht,

gegebenenfalls in Gegenwart eines Säureakzeptors und gegebenenfalls in Gegenwart eines Lösungsmittels umsetzt, oder

b) Phenoxybenzylhalogenide der Formel IV:

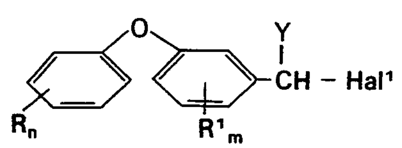

(IV)

in welcher:

R, $R^1$, Y, n und m die oben angegebene Bedeutung haben, und

$Hal^1$ für Halogen, vorzugsweise Chlor oder Brom, steht,

mit Cyclopropancarbonsäuren der Formel V:

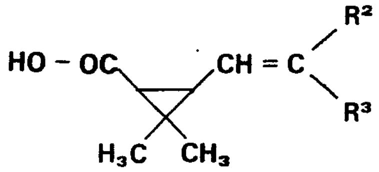

(V)

in welcher:
$R^2$ und $R^3$ die oben angegebene Bedeutung haben,
gegebenenfalls in Form der Alkali-, Erdalkali- oder Ammoniumsalze oder gegebenenfalls in Gegenwart eines Säureakzeptors und gegebenenfalls in Gegenwart eines Lösungsmittels umsetzt.

Überraschenderweise zeigen die substituierten Phenoxybenzyloxycarbonylderivate eine bessere insektizide und akarizide Wirkung als die entsprechenden vorbekannten Produkte analoger Konstitution und gleicher Wirkungsrichtung. Die Produkte stellen somit eine echte Bereicherung der Technik dar. Diese Verbindungen und ihre Verwendung sind Gegenstand der Stammanmeldung EP Nr. 78.100252.2.

Bevorzugt sind substituierte Cyclopropancarbonsäuren und ihre Derivate der allgemeinen Formel:

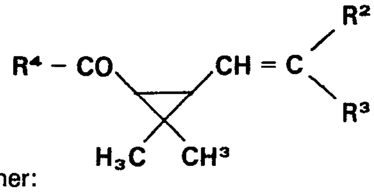

in welcher:
$R^2$ für Chlor oder Brom,
$R^3$ für Phenyl, Phenylthio, Halogenphenyl, wobei Halogen insbesondere Chlor oder Fluor ist, oder Alkylphenyl, wobei der Alkylrest 1 bis 6, insbesondere 1 bis 4, Kohlenstoffatome hat,
$R^4$ für Chlor oder Methoxy steht.

Die substituierten Cyclopropancarbonsäuren und ihre Derivate können nach literaturbekannten Verfahren aus den Cyclopropancarbonsäureethylestern durch saure oder alkalische Verseifung hergestellt werden. Die freien Säuren werden nach bekannten Verfahren in die entsprechenden Salze oder Säurehalogenide übergeführt. Die Ethylester können wiederum nach literaturbekannten Verfahren, z.B. aus 2,2-Dimethyl-3-formylcyclopropancarbonsäureethylester und 0,0-Diethylmethanphosphonsäurediesterderivaten nach folgendem Formelschema hergestellt werden:

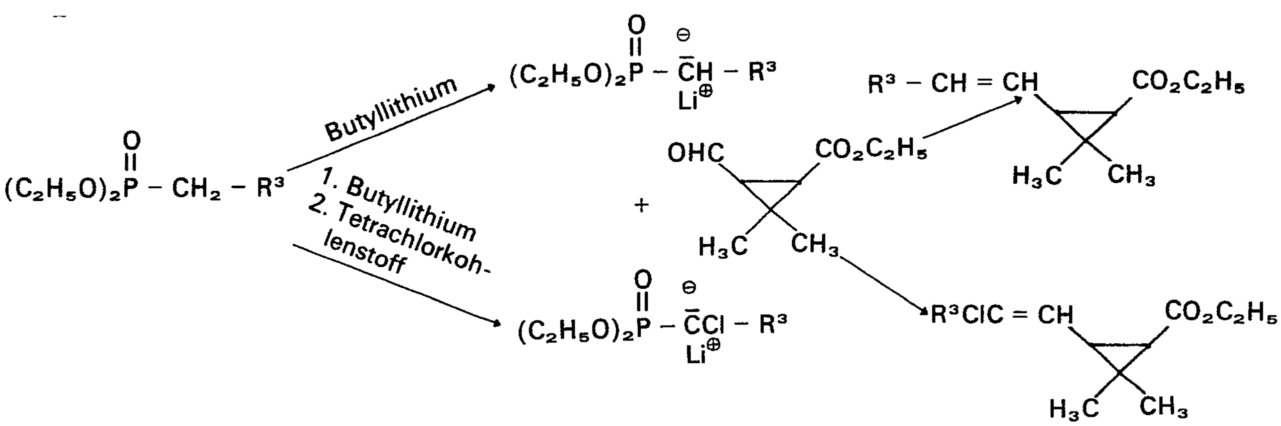


Als Beispiele für die Cyclopropancarbonsäurederivate seien im einzelnen genannt:
3-(2-Phenyl-2-chlorvinyl)-, 3-[2-(2-Chlorphenyl)-2-chlorvinyl]-, 3-[2-(4-Chlorphenyl)-2-chlorvinyl]-, 3-[2-(3,4-Dichlorphenyl)-2-chlorvinyl]-, 3-[2-(4-Fluorphenyl)-2-chlorvinyl]-, 3-(2-Pentachlorphenyl-2-chlorvinyl)-, 3-(2-Pentafluorphenyl-2-chlorvinyl)-, 3-[2-Phenylthio-2-chlorvinyl]-, 3-[2-(2-Chlorphenylthio)-2-chlorvinyl]-, 3-[2-(4-Chlorphenylthio)-2-chlorvinyl]-, 3-[2-(3,4-Dichlorphenylthio)-2-chlorvinyl]-, 3-[2-(4-Fluorphenylthio)-2-chlorvinyl]-, 3-(2-Pentachlorphenylthio-2-chlorvinyl)-, 3-(2-Pentafluorphenylthio-2-chlorvinyl)-, 3-[2-(4-tert.-Butylphenyl)-2-chlorvinyl]-2,2-dimethylcyclopropancarbonsäure bzw. -2,2-dimethylcyclopropancarbonsäurechlorid, ferner 3-(2-Phenyl-2-bromvinyl)-, 3-[2-Chlorphenyl)-2-bromvinyl]-, 3-[2-(4-Chlorphenyl)-2-bromvinyl]-, 3-[2-(3,4-Dichlorphenyl)-2-bromvinyl]-, 3-[2-(4-Fluorphenyl)-2-bromvinyl]-, 3-(2-Pentachlorphenyl-2-bromvinyl)-, 3-(2-Pentafluorphenyl-2-bromvinyl)-, 3-(2-Phenylthio-2-bromvinyl)-, 3-[2-(2-Chlorphenylthio)-2-bromvinyl]-, 3-[2-(4-Chlorphenylthio)-2-bromvinyl]-, 3-[2-(3,4-Dichlorphenylthio)-2-bromvinyl]-, 3-[2-(4-Fluorphenylthio)-2-bromvinyl]-, 3-(2-Pentachlorphenylthio-2-bromvinyl)-, 3-(2-Pentafluorphenylthio-2-bromvinyl)-, 3-[2-(4-tert.-Butylphenyl)-2-bromvinyl]-2,2-dimethylcyclopropancarbonsäure bzw. -2,2-dimethylcyclopropancarbonsäurerechlorid.

**Beispiel 1:**

a) 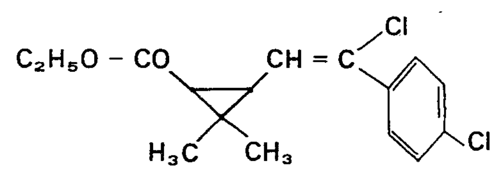

26,3 g (0,1 mol) 4-Chlorbenzylphosphonsäurediethylester werden in 400 ml absolutem Tetrahydrofuran gelöst und auf −70°C abgekühlt. Im Stickstoffgegenstrom und unter gutem Rühren werden 0,11 mol n-Butyllithium (15%ige Lösung in Hexan) zugetropft und dann die Reaktionsmischung noch 15 min bei −70° C nachgerührt. Anschliessend werden weiterhin unter Stickstoff 15,4 g (0,1 mol) Tetrachlorkohlenstoff bei −70° C zugetropft, die Reaktionsmischung färbt sich dabei rotbraun. Nach weiterem 15minütigem Rühren gibt man bei −65°C 18,6 g (0,1 mol) 2,2-Dimethyl-3-formylcyclopropancarbonsäureethylester zu. Man lässt dann die Reaktionsmischung auf Raumtemperatur kommen und rührt noch 3 h bei 25° C nach. Der Reaktionsansatz wird dann in 2 l Wasser gegossen und mit 600 ml Ether extrahiert. Die Etherphase wird über Natriumsulfat getrocknet, das Lösungsmittel im Vakuum abgezogen und der ölige Rückstand bei 150-155° C/2 Torr destilliert. Man erhält in 54,3%iger Ausbeute 2,2-Dimethyl-3-(2-chlor-2-p-chlorphenylvinyl) cyclopropancarbonsäureethylester.

Analog können dargestellt werden:

| Konstitution | Ausbeute (% der Theorie) | Physikal. Daten (Brechungsindex; Siedepunkt °C/Torr) |
|---|---|---|
| 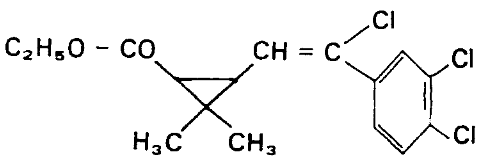 | 45,4 | $n_D^{25}$: 1,5621 |
| 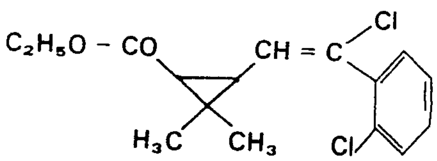 | 52,7 | 155-160/1 |
| 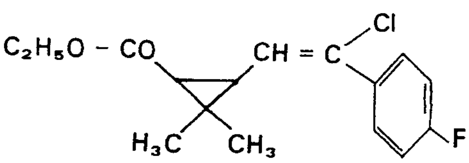 | 57 | $n_D^{25}$: 1,5208 |
| 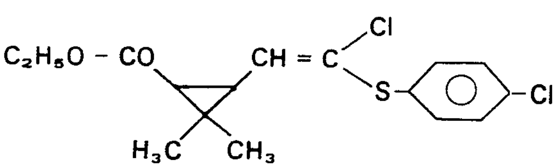 | 81 | $n_D^{25}$: 1,5025 |
| 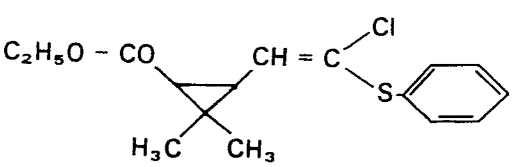 | 71 | $n_D^{26}$: 1,5359 |

Die nach Beispiel 1 dargestellten Cyclopropancarbonsäureethylester werden nach bekannten Methoden sauer oder alkalisch zu den entsprechenden Säuren verseift. Diese werden nach ebenfalls bekannten Verfahren in die entsprechenden Salze (z.B. Alkali- oder Ammoniumsalze) bzw. Säurechloride übergeführt.

**Patentansprüche**

1) Substituierte Cyclopropancarbonsäuren und ihre Derivate der Formel:

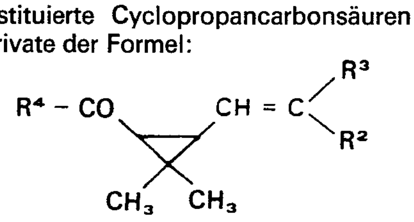

in welcher:
$R^2$ für Halogen steht,
$R^3$ für Phenyl oder Phenylthio steht, wobei die Phenylringe gegebenenfalls ein- oder mehrfach, gleich oder verschieden durch Alkyl oder Halogen substituiert sein können,
$R^4$ für OH, Halogen oder $C_{1-4}$-Alkoxy steht, wobei $R^4$ für den Fall, dass $R^3$ für Phenyl steht, für OH, Halogen oder Methoxy steht.

2) Verfahren zur Herstellung der substituierten Cyclopropancarbonsäuren und ihrer Derivate der Formel:

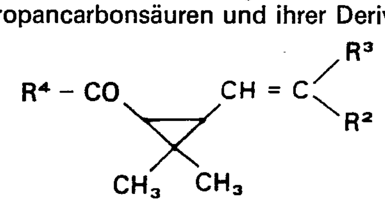

in welcher:

$R^2$ für Chlor steht,

$R^3$ für Phenyl oder Phenylthio steht, wobei die Phenylringe gegebenenfalls ein- oder mehrfach, gleich oder verschieden durch Alkyl oder Halogen substituiert sein können,

$R^4$ für OH, Halogen oder Ethoxy steht, wobei $R^4$ für den Fall, dass $R^3$ für Phenyl steht, für OH oder Halogen steht,

dadurch gekennzeichnet, dass man ein Cyclopropancarbonsäurederivat der Formel:

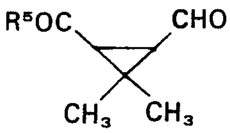

in welcher:

$R^5$ für Ethoxy steht,

mit Phosphonestern der Formel:

$$(R^6O)_2\overset{\overset{O}{\|}}{P} - CH_2 - R^3$$

in welcher:

$R^6$ für Ethyl steht, und

$R^3$ die oben angegebene Bedeutung besitzt,

und Butyllithium in Gegenwart von Tetrachlorkohlenstoff umsetzt, und anschliessend für den Fall, dass $R^4$ für OH steht, die erhaltenen Ester verseift oder anschliessend für den Fall, dass $R^4$ für Halogen steht, die Säuren in bekannter Weise halogeniert.

3) Substituierte Cyclopropancarbonsäure und ihre Derivate der Formel:

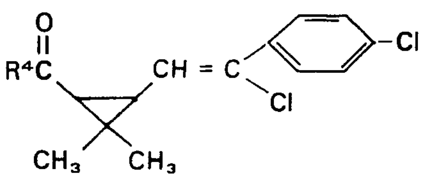

in welcher:

$R^4$ für OH, $C_{1-4}$-Alkoxy oder Halogen steht.

**Claims**

1) Substituted cyclopropane carboxylic acids and their derivatives corresponding to the following formula:

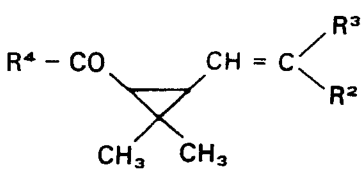

in which:

$R^2$ represents halogen,

$R^3$ represents phenyl or phenylthio; the phenyl rings may optionally be substituted once or several times in the same way or differently by alkyl or halogen, and

$R^4$ represents OH, halogen $C_{1-4}$-alkoxy; where $R^3$ represents phenyl, $R^4$ represents OH, halogen or methoxy.

2) A process for the production of substituted cyclopropane carboxylic acids and their derivates corresponding to the following formula:

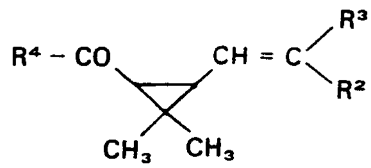

in which:

$R^2$ represents chlorine,

$R^3$ represents phenyl or phenylthio; the phenyl rings may optionally be substituted once or several times in the same way or differently by alkyl or halogen, and

$R^4$ represents OH, halogen or ethoxy; where $R^3$ represents phenyl, $R^4$ represents OH or halogen,

characterised in that a cyclopropane carboxylic acid derivative corresponding to the following formula:

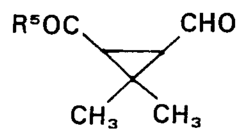

in which:

$R^5$ represents ethoxy,

is reacted with phosphonic acid esters corresponding to the following formula:

$$(R^6O)_2\overset{\overset{O}{\|}}{P} - CH_2 - R^3$$

in which:

$R^6$ represents ethyl, and

$R^3$ is as defined above,

and butyl lithium in the presence of carbon tetrachloride and, where $R^4$ represents OH, the esters obtained are hydrolysed or, where $R^4$ represents halogen, the acids are halogenated in known manner.

3) Substituted cyclopropane carboxylic acids and their derivatives corresponding to the following formula:

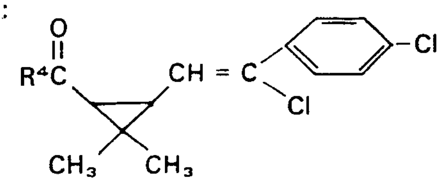

in which:

$R^4$ represents OH, $C_{1-4}$-alkoxy or halogen.

**Revendications**

1) Acides cyclopropanecarboxyliques substitués et leurs dérivés de formule:

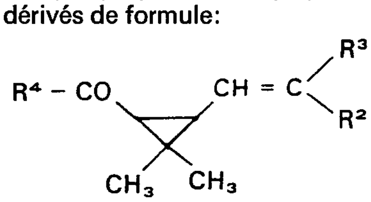

dans laquelle:

$R^2$ représente un halogène,

$R^3$ représente un phényl ou un phénylthio, les noyaux phényle pouvant éventuellement porter un ou plusieurs substituants identiques ou différents et alkyle ou halogène, et

$R^4$ représente un OH, un halogène ou un alcoxy en $C_1$-$C_4$ et, dans le cas où $R^3$ est un phényle, $R^4$ représente OH, un halogène ou un méthoxy.

2) Procédé pour la préparation des acides cyclopropanecarboxyliques substitués et leurs dérivés de formule:

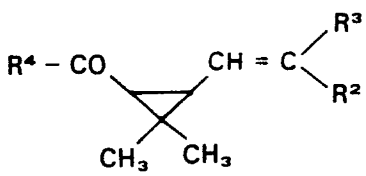

dans laquelle:

$R^2$ représente un halogène,

$R^3$ représente un phényle ou un phénylthio, les noyaux phényle pouvant éventuellement porter un ou plusieurs substituants identiques ou différents alkyle ou halogène, et

$R^4$ représente un OH, un halogène ou un ethoxy et, dans le cas où $R^3$ est un phényle, $R^4$ représente OH, ou halogène,

caractérisé en ce que l'on fait réagir un dérivé d'acide cyclopropanecarboxylique de formule:

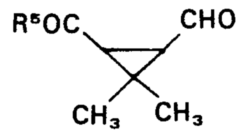

dans laquelle:

$R_5$ représente un éthoxy

avec des esters phosphoniques de formule:

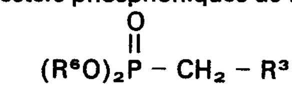

dans laquelle:

$R^6$ représente un éthyle, et

$R^3$ a la signification indiquée ci-dessus,

et le butyllithium en présence de tétrachlorure de carbone et, dans le cas où $R^4$ est un OH, on saponifie ensuite les esters obtenus, ou bien, dans le cas où $R^4$ est un halogène, on halogène ensuite les acides de manière connue.

3) Acide cyclopropanecarboxylique substitué et ses dérivés de formule:

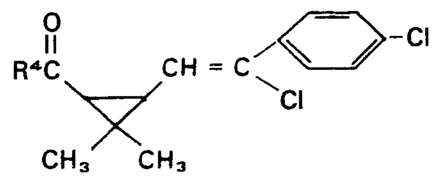

dans laquelle:

$R^4$ est un OH, un alcoxy en $C_1$-$C_4$ ou un halogène.